# EUROPÄISCHE PATENTSCHRIFT

(11) **EP 1 752 658 B1**
(45) Veröffentlichungstag und Bekanntmachung des Hinweises auf die Patenterteilung: **06.06.2012**
(21) Anmeldenummer: 06016083.5
(22) Anmeldetag: 02.08.2006
(51) Int. Cl.: F03B 11/00, F03B 11/02

(54) **Durchströmturbine mit Tangential-Laufrad**
Cross-flow turbine comprising a tangential runner
Turbine à courant transversal comprenant une roue tangentielle

(30) Priorität: 13.08.2005 DE 102005038467
(43) Veröffentlichungstag der Anmeldung: 14.02.2007
(73) Patentinhaber: Wasserkraft-Volk AG, 79261 Gutach (DE)
(72) Erfinder: Volk, Manfred, 79263 Simonswald (DE)
(74) Vertreter: Maucher, Wolfgang

(56) Entgegenhaltungen:
- JP-A- 8 074 719
- JP-A- 55 010 006
- JP-A- 55 054 676
- JP-A- 57 163 162
- US-A- 1 516 822
- US-A- 1 823 702
- US-A- 4 049 361

## Beschreibung

Die Erfindung betrifft eine Durchströmturbine mit einem mit Schaufeln besetzten Tangential-Laufrad, dessen Schaufeln an ihren stirnseitigen Enden jeweils mit einem Laufradboden oder mit einer Nabenscheibe verbunden oder verschweißt sind und von einer durch die Laufradböden verlaufenden Welle einen inneren Abstand haben, so dass das quer zum Verlauf der Welle zuströmende Wasser das Laufrad zwei Mal durchströmt, wobei das Laufrad mittels seiner Welle in einem Gehäuse gelagert ist und die Schaufeln und/oder die Laufradböden jeweils in einem insbesondere konzentrisch zur Welle angeordneten, vorzugsweise kreisförmigen Ausschnitt der Gehäusewände angeordnet sind und einen Spaltabstand haben.

Derartige Durchströmturbinen sind Wasserturbinen, welche die Energie des Wassers durch radiales Durchströmen nutzen. Solche Durchströmturbinen gehören zu den Freistrahlturbinen, bei denen sich jedoch vor dem Laufrad je nach Fallhöhe ein Überdruck bildet. Dadurch bedingt entstehen erhebliche Spaltwasserverluste, denn es ist nicht zu vermeiden, dass das zuströmende Wasser zwar das Laufrad möglichst vollständig beaufschlagt, stirnseitig aber durch die Spalte zwischen dem Laufradboden und dem Gehäuse ein Teil des Wassers die Schaufeln "umgeht" und somit für die Energiegewinnung an der Welle verloren ist. Durch solche Spaltverluste ist also der Gesamtwirkungsgrad vermindert.

Die JP 08074719 offenbart eine gattungsgemäße Durchströmturbine.

Es besteht deshalb die Aufgabe, eine Durchströmturbine der eingangs definierten Art mit in Gebrauchsstellung insbesondere horizontal verlaufender Welle und horizontal angeordneten Schaufeln zu schaffen, bei welcher der Wirkungsgrad und die Wirtschaftlichkeit bei einer vereinfachten Konstruktion verbessert sind.

Zur Lösung dieser Aufgabe ist die Durchströmturbine der eingangs genannten Art dadurch gekennzeichnet, dass die Laufradböden oder Nabenscheiben einen in axialer Richtung profilierten oder abgestuften Umfang haben und die sie aufnehmenden Ausschnitte der Gehäusewände in analoger Weise profiliert oder abgestuft sind, so dass der jeweilige Spalt zwischen Laufradboden oder Nabenscheibe und Gehäusewand profiliert oder abgestuft ist.

Durch diese Profilierung oder Abstufung wird der Austritt des Wassers zwischen Gehäusewand und Laufradboden erschwert, so dass also mehr Wasser auf die Schaufeln selbst gelenkt und dadurch der Wirkungsgrad der Durchströmturbine verbessert wird, zumal dieses Wasser die Schaufeln zwei Mal beaufschlagt.

Weiterhin ist es erfindungswesentlich, dass die Begrenzung des profilierten oder abgestuften Spalts an der Gehäuseöffnung an wenigstens einem Ring angeordnet sein kann, der mit der Gehäusewandung und/oder mit dem Laufboden verbunden ist. Somit kann zumindest eine Begrenzung des Spalts an einem separaten Ring angebracht werden, was einfacher ist, als wenn beispielsweise die Gehäuseöffnung entsprechend profiliert und abgestuft werden muss.

Darüber hinaus ist es erfindungswesentlich, dass der/die den Spalt begrenzende(n) Ring(e) austauschbar insbesondere an der Gehäusewandung befestigt sein kann (können). Dadurch wird ermöglicht, im Falle eines Verschleißes im Bereich der Spalte lediglich die Ringe auszutauschen und eine Reparatur beispielsweise durch Auftragsschweißen zu vermeiden. Diese Austauschbarkeit des den Spalt begrenzenden Rings in der Gehäuseöffnung verbessert also im Laufe der Zeit die Wirtschaftlichkeit der Durchströmturbine auch in solchen Fällen, in denen der Spalt nicht profiliert oder abgestuft ist, ist aber vor allem im Zusammenhang mit einer solchen Abstufung oder Profilierung von erheblichem Vorteil, weil gerade an einer solchen Abstufung oder Profilierung eine größere Gefahr eines Verschleißes zu erwarten ist und eine Reparatur durch Auftragschweißen aufwändig und schwierig wäre.

Eine einmalige Stufung innerhalb dieses Spalts ergibt eine erhebliche Verbesserung des Wirkungsgrades. Eine optimale Steigerung dieses Wirkungsgrades kann jedoch erreicht werden, wenn der Spalt zwischen Laufboden und Gehäuse wenigstens zwei Mal oder drei Mal oder gegebenenfalls noch öfter abgestuft ist. Eine beispielsweise zweimalige oder dreimalige Abstufung stellt einen guten Kompromiss zwischen Herstellungsaufwand und Verbesserung des Wirkungsgrades dar.

Eine zweckmäßige Ausführungsform der Erfindung kann vorsehen, dass der abgestufte Spalt parallel oder konzentrisch oder unter einem spitzen Winkel zum Wellenverlauf angeordnete Spaltabschnitte und quer oder radial zur Welle angeordnete Spaltbereiche aufweist, die einander fortsetzen, wobei der Eintritt in den Spalt einerseits und der Austritt daraus jeweils axiale oder achsparallele oder unter einem spitzen Winkel angeordnete Spaltabschnitte sein können. Der Spalt kann also im Verlaufe seiner Abstufung zunächst achsparallel und konzentrisch zur Welle oder auch unter einem etwas spitzen Winkel zur Mittelachse dieser Welle orientiert sein, bevor an einer ersten Abstufung ein quer oder rechtwinklig zum Wellenverlauf angeordneter Spaltbereich folgt, der wiederum in einen konzentrischen Spaltbereich übergeht, was im Verlaufe dieses Spalts mehrfach wiederholt sein kann. Der letzte Teil des Spalts ist dann wieder ein Spaltabschnitt.

Eine weitere Verbesserung des Wirkungsgrades der erfindungsgemäßen Durchströmturbine durch ein möglichst weitgehendes Verhindern eines Wasserdurchtritts durch den gestuften Spalt kann dadurch erreicht werden, dass die radial oder schräg oder quer zur Welle angeordneten Spaltbereiche eine größere Spaltbreite als die parallel oder koaxial oder spitzwinklig zur Welle verlaufenden Spaltabschnitte haben. Zwar können die Breitenabmessungen der Spaltbereiche und der Spaltabschnitte auch gleich sein, jedoch ergibt die Verwendung größerer Spaltbreiten in den quer oder radial oder rechtwinklig zu Welle angeordneten Spaltbereichen eine plötzliche Verminderung der Strömungsgeschwindigkeit, was gleichzeitig an dieser Stelle zu Verwirbelungen führt, die den Durchtritt von Wasser durch den Spalt erschweren und somit vermindern.

Dabei kann der den Spalt begrenzende Ring eine axiale Abmessung haben, die der Dicke der Gehäusewandung oder der des Laufradbodens etwa entspricht oder schmaler oder breiter ist und der Ring kann mit der Innenseite und/oder der Außenseite der Gehäusewand oder des Laufradbodens bündig sein. Besonders günstig ist in diesem Zusammenhang, wenn dieser den Spalt begrenzende Ring einen Teil der Gehäusewand bildet und die Innenseite dieses Rings den Ausschnitt der Gehäusewand begrenzt, in welchem sich dann jeweils der Laufradboden befindet.

Zwar könnte die Profilierung des Spalts innerhalb des Gehäusesausschnitts so angeordnet sein, dass der Spalt von innen nach außen hinsichtlich seines Durchmessers zunimmt. Günstiger für das Verhindern oder Vermindern eines Wasserdurchtritts durch den Spalt ist es jedoch, wenn der Durchmesser des profilierten oder abgestuften, kreisförmig umlaufenden Spalts an der Innenseite des Gehäuses größer als an der Außenseite des Gehäuses ist, so dass also der Durchmesser des Spalts von innen nach außen abnimmt.

Vor allem bei Kombination einzelner oder mehrerer der vorbeschriebenen Merkmale und Maßnahmen ergibt sich eine Durchströmturbine, bei welcher der Durchflusswert für das Wasser an dem Spalt zwischen Gehäuseausschnitt und Laufradboden um einen Faktor von beispielsweise über 100 reduziert und somit der Wirkungsgrad der Turbine deutlich erhöht werden kann. Wird dabei ein Spaltring, also ein die Abstufung des Spalts begrenzender, insbesondere austauschbarer Ring verwendet, kann dieser günstige Wirkungsgrad auch nach einem gewissen Verschleiß immer wieder sehr einfach und schnell durch Austausch des verschlissenen Ringes gegen einen neuen oder reparierten Ring zurückgewonnen werden.

Nachstehend ist ein Ausführungsbeispiel der Erfindung anhand der Zeichnung näher beschrieben. Es zeigt in zum Teil schematisierter Darstellung:
- Fig. 1: eine schaubildliche Ansicht einer Durchströmturbine, wobei deren wesentliche Teile, nämlich das Gehäuse, das mit Schaufeln besetzte TangentialLaufrad und an dem Gehäuse anbringbare Träger für die Welle des Laufrads auseinandergezogen beziehungsweise schematisiert vor ihrer Montage dargestellt sind,
- Fig. 2: einen schematisierten Längsschnitt der erfindungsgemäßen Durchströmturbine nach der Montage der in Fig.1 noch auseinandergezogen dargestellten Teile, auch gemäß der Schnittlinie A-A in Fig.3,
- Fig. 3: einen horizontalen Teillängsschnitt durch die in Fig.2 dargestellte Durchströmturbine etwa durch die Mitte des Laufrads sowie
- Fig. 4: in vergrößertem Maßstab die in Fig.3 markierte Einzelheit B, nämlich einen Teil des abgestuften Spalts zwischen Gehäuseausschnitt und Laufradboden.

Eine im ganzen mit 1 bezeichnete Durchströmturbine weist ein mit Schaufeln 2 besetztes Tangential-Laufrad 3, im Folgenden auch "Laufrad 3" genannt, auf, dessen Schaufeln 2 an ihren stirnseitigen Enden jeweils mit einem Laufradboden 4 oder mit einer Nabenscheibe verbunden oder verschweißt sind.

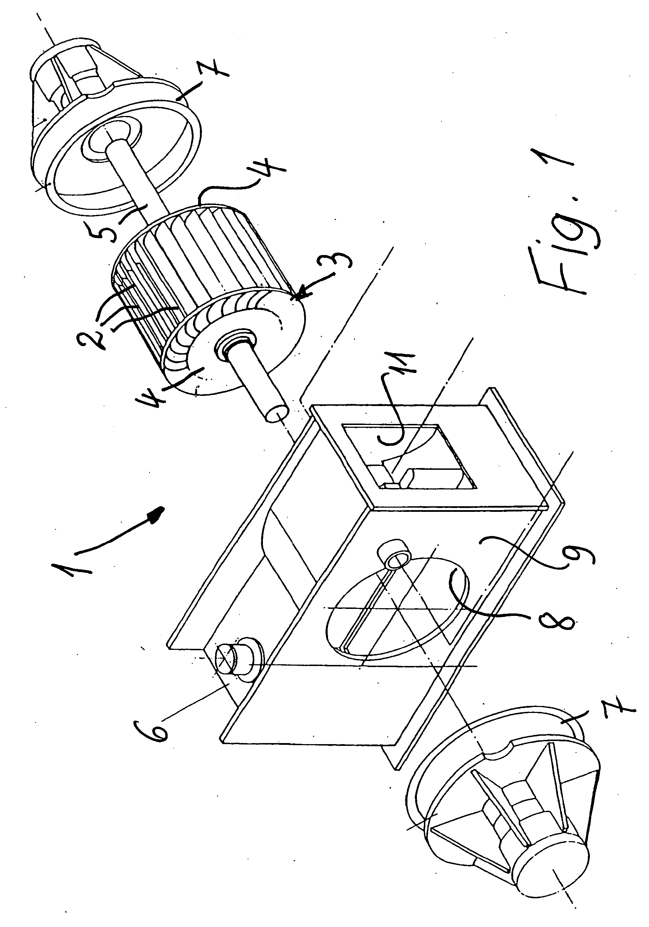

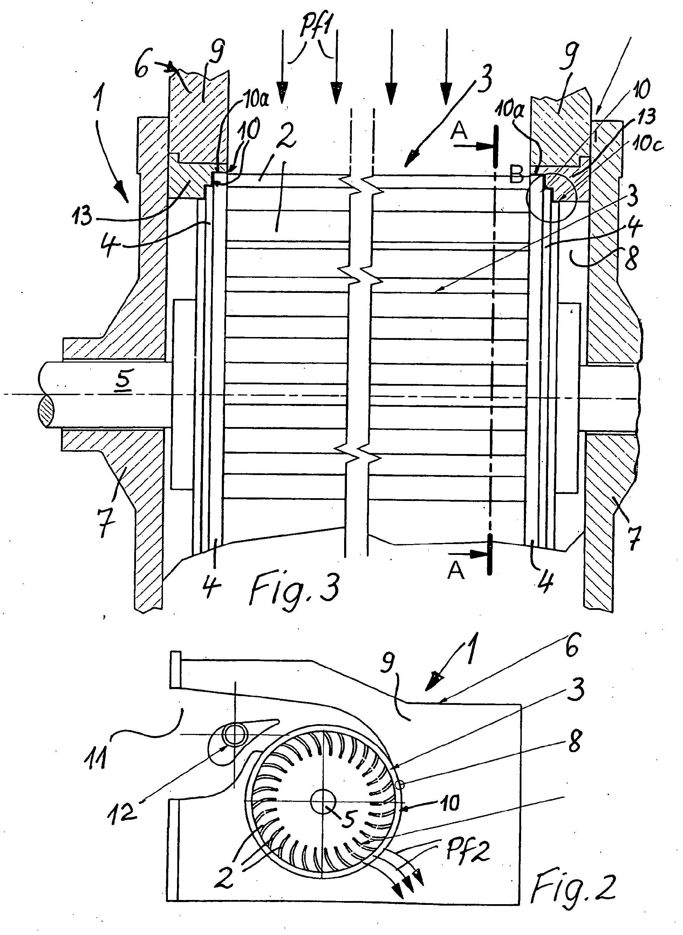

Gemäß Fig.2 haben die in Gebrauchsstellung horizontal und parallel zu einer Welle 5 verlaufenden Schaufeln 2 von dieser auch durch die Laufradböden 4 verlaufenden Welle 5 einen inneren Abstand, so dass das gemäß den Pfeilen Pf 1 quer zum Verlauf oder der Anordnung der horizontalen Welle 5 zuströmende Wasser das Laufrad 3 zwei Mal durchströmt und dann erst gemäß den Pfeilen Pf 2 wieder verlässt. Das Laufrad 3 ist dabei gemäß den Fig.1 und 3 mittels seiner Welle 5 ebenfalls horizontal orientiert in einem Gehäuse 6 gelagert, wobei an der Außenseite des Gehäuses 6 Lagerträger 7 für diese Lagerung der Welle 5 angebracht werden.

Vor allem in Fig.3 - in Verbindung mit Fig.1 - erkennt man noch, dass die Schaufeln über ihre Laufradböden 4 jeweils in einem konzentrisch zur Welle 5 angeordneten, im Ausführungsbeispiel kreisförmigen Ausschnitt 8 der Gehäusewände 9 angeordnet sind und einen Spaltabstand haben, damit die Drehbewegung des Laufrades 3 und seiner Laufradböden 4 relativ zu der stehenden Gehäusewand 9 reibungslos oder reibungsarm möglich ist.

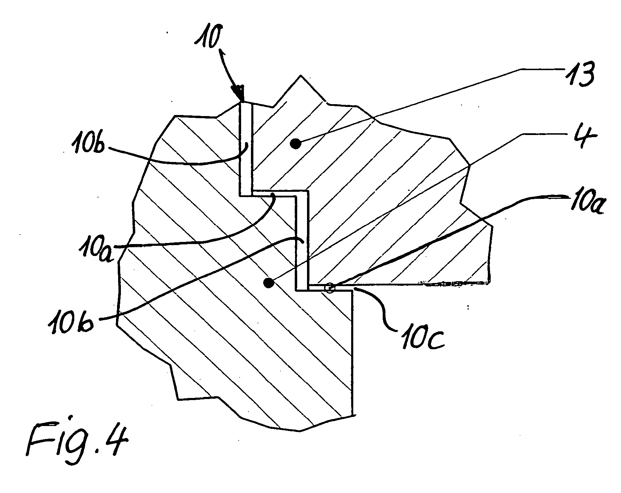

In den Fig.3 und 4 erkennt man, dass die Laufradböden 4 einen in axialer Richtung profilierten oder abgestuften Umfang haben und die sie aufnehmenden Ausschnitte 8 der Gehäusewände 9 in analoger Weise profiliert oder abgestuft sind, so dass der jeweilige Spalt 10 zwischen Laufradboden 4 oder Nabenscheibe und Gehäusewand 9 profiliert oder abgestuft ist. Dadurch wird der Durchtritt von Wasser durch diesen Spalt 10 erschwert, also mehr Wasser auf Schaufeln 2 gelenkt und dadurch der Wirkungsgrad der Turbine 1 verbessert.

In Fig.3 und 4 erkennt man, dass dabei der Spalt 10 zwischen Laufradboden 4 und Gehäuse 8 beziehungsweise Gehäusewand 9 zwei Mal abgestuft ist, was den erwähnten Effekt verstärkt. Auch eine dreimalige oder gegebenenfalls noch häufigere Abstufung wäre möglich.

Gemäß Fig.4 weist der abgestufte Spalt 10 parallel oder konzentrisch zum Wellenverlaufe angeordnete Spaltabschnitte 10a und quer oder radial zur Welle 5 angeordnete Spaltbereiche 10b auf, die einander fortsetzen, wobei der Eintritt in den Spalt 10 einerseits und der Austritt 10c daraus jeweils axiale oder achsparallele Spaltabschnitte 10a sind oder begrenzen.

Somit muss also durch den Spalt 10 austretendes Wasser zunächst in etwa horizontaler Richtung in einen ersten Spaltabschnitt 10a eintreten, dann an einem sich anschließenden Spaltabschnitt 10b seine Strömungsrichtung erheblich ändern, wonach es wiederum in eine horizontale Richtung in einem weiteren Spaltabschnitt 10a umgelenkt wird, was sich dann wiederholt, bis das Wasser den Spalt 10 schließlich an dem Austritt 10c wiederum etwa in horizontaler Richtung verlassen kann. Dies ergibt gegenüber der Strömung dieses Leck-Wassers einen erheblichen Widerstand, so dass nur sehr wenig Wasser durch den Spalt 10 austreten kann und dem Antrieb des Laufrades 3 verloren geht.

Es sei noch erwähnt, dass für den Zufluss gemäß den Pfeilen Pf 1 in üblicher Weise hinter einer Eintrittsöffnung 11 in das Gehäuse 8 eine Leitschaufel 12 vorgesehen ist, wobei die beschriebene Spaltausbildung dafür sorgt, dass die durch die Leitschaufel 12 optimal ausgerichtete Wasserströmung mit möglichst geringen Spaltverlusten an den Schaufeln 2 des Laufrades 3 zwei Mal wirksam wird.

In Fig.4 erkennt man außerdem eine weitere den Wirkungsgrad der Turbine 1 verbessernde Maßnahme, die darin besteht, dass die radial oder quer oder gegebenenfalls auch schräg zur Welle 5 angeordneten Spaltbereiche 10b eine größere Spaltbreite als die parallel oder koaxial oder gegebenenfalls spitzwinklig zur Welle 5 verlaufenden Spaltabschnitte 10a haben. Zwar könnten diese Abmessungen der Spaltbereiche 10b und der Spaltabschnitte 10a auch gleich sein, jedoch ergibt sich durch diese unterschiedlichen Abmessungen eine zusätzliche Behinderung einer Strömung von Wasser durch den Spalt 10, weil in den verbreiterten Spaltbereichen 10b Verwirbelungen auftreten können, die der Strömung durch diesen Spalt 10 entgegenwirken können.

In Fig.3 ist dargestellt, dass die Begrenzung des im Ausführungsbeispiel profilierten und abgestuften Spalts 10 an dem Gehäuse-Ausschnitt 8 an einem Ring 13 angeordnet ist, der mit der Gehäusewandung 9 verbunden ist. Denkbar wäre, dass ein derartiger Ring 13 auch zusätzlich an dem Laufradboden 4 oder nur an dem Laufradboden 4 vorgesehen wird. Vorteilhaft ist, dass dieser den Spalt 10 begrenzende Ring 13 austauschbar oder lösbar an der Gehäusewandung 9 befestigt ist, da er durch die ständige Beaufschlagung mit unter Druck stehendem Wasser nach und nach verschlissen werden kann, so dass der Spalt 10 nach und nach mehr Wasser durchlassen kann. Eine Reparatur ist dann besonders einfach möglich, weil nur der Ring 13 ausgetauscht werden muss.

Dabei verdeutlicht Fig.3, dass im Ausführungsbeispiel der den Spalt 10 begrenzende Ring 13 eine axiale Abmessung hat, die der Dicke der Gehäusewand 9 etwa entspricht, so dass der Ring 13 in diesem Falle sowohl mit der Innenseite als auch mit der Außenseite der Gehäusewand 9 bündig ist. Er könnte aber auch schmaler oder breiter sein.

Damit das durch den Spalt 10 austretende Wasser einen zusätzlichen Strömungswiderstand hat, ist im Ausführungsbeispiel außerdem vorgesehen, dass der Durchmesser des profilierten oder abgestuften, kreisförmig umlaufenden Spalts 10 an der Innenseite des Gehäuses 6 größer als an seiner Außenseite ist. Somit vermindert sich der Durchlassquerschnitt des Spalts 10 von innen nach außen, was zusammen mit der Profilierung oder Abstufung einen erheblichen Widerstand für dieses Leck-Wasser bedeutet.

Die Durchströmturbine 1 hat zwischen den Laufradböden 4 oder Nabenscheiben, womit ihre Schaufeln 2 gehalten sind, und dem diese Laufradböden 4 aufnehmenden Ausschnitt 8 der Gehäusewände 9 einen profilierten oder abgestuften Spalt 10, der dem Durchtritt von Wasser erheblich mehr Widerstand entgegensetzt als ein bisher üblicher einfacher Axialspalt. Durch Einfügen eines entsprechend profilierten Spaltrings 13 kann die Anbringung der Abstufung und eine Reparatur bei Verschleiß im Spaltbereich vereinfacht werden.

## Patentansprüche

1. Durchströmturbine (1) mit einem mit Schaufeln (2) besetzten Tangential-Laufrad (3), vor welchem ein Überdruck besteht und dessen Schaufeln (2) an ihren stirnseitigen Enden jeweils mit einem Laufradboden (4) oder mit einer Nabenscheibe verbunden oder verschweißt sind und von einer durch die Laufradböden (4) horizontal verlaufenden Welle (5) einen inneren Abstand haben, so dass das quer zum Verlauf der Welle (5) zuströmende Wasser das Laufrad (3) zwei Mal durchströmt, wobei das Laufrad (3) mittels seiner Welle (5) in einem Gehäuse (6) gelagert ist und die horizontal und parallel zur Welle (5) verlaufenden Schaufeln (2) und/oder die Laufradböden (4) jeweils in einem konzentrisch zur Welle (5) angeordneten, kreisförmigen Ausschnitt (8) der Gehäusewände (9) angeordnet sind und einen Spaltabstand haben, **dadurch gekennzeichnet, dass** die Laufradböden (4) oder Nabenscheiben einen in axialer Richtung profilierten oder abgestuften Umfang haben und die sie aufnehmenden Ausschnitte (8) der Gehäusewände (9) in analoger Weise profiliert oder abgestuft sind, so dass der jeweilige Spalt (10) zwischen Laufrädboden (4) oder Nabenscheibe und Gehäusewand (9) profiliert oder abgestuft ist, dass die Begrenzung des profilierten oder abstuften Spalts (10) an dem Gehäuse-Ausschnitt (8) an wenigstens einem Ring (13) angeordnet ist, der mit der Gehäusewandung (9) und/oder mit dem Laufradboden verbunden ist und dass der/die den Spalt (10) begrenzende(n) Ring(e) (13) austauschbar an der Gehäusewandung (9) befestigt ist (sind).

2. Durchströmturbine nach Anspruch 1, **dadurch gekennzeichnet, dass** der Spalt (10) zwischen Laufradboden (4) und Gehäuse (8) wenigstens zwei Mal oder drei Mal abgestuft ist.

3. Durchströmturbine nach Anspruch 1 oder 2, **dadurch gekennzeichnet, dass** der abgestufte Spalt (10) parallel oder konzentrisch oder unter einem spitzen Winkel zum Wellenverlauf angeordnete Spaltabschnitte (10a) und quer oder radial zur Welle (5) angeordnete Spaltbereiche (10b) aufweist, die einander fortsetzen, wobei der Eintritt in den Spalt (10) einerseits und der Austritt (10c) daraus jeweils axiale oder achsparallele oder unter spitzem Winkel angeordnete Spaltabschnitte sind.

4. Durchströmturbine nach einem der Ansprüche 1 bis 3, **dadurch gekennzeichnet, dass** die radial oder schräg oder quer zur Welle (5) angeordneten Spaltbereiche (10b) eine gleiche oder größere Spaltbreite als die parallel oder koaxial oder spitzwinklig zur Welle (5) verlaufenden Spaltabschnitte (10a) haben.

5. Durchströmturbine nach einem der Ansprüche 1 bis 4, **dadurch gekennzeichnet, dass** der den Spalt (10) begrenzende Ring (13) eine axiale Abmessung hat, die der Dicke der Gehäusewandung (9) oder des Laufradbodens (4) etwa entspricht oder schmaler oder breiter als die Gehäusewandung (9) oder der Laufradboden (4) ist und dass der Ring (13) mit der Innenseite und/oder der Außenseite der Gehäusewand (9) oder des Laufradbodens bündig ist.

6. Durchströmturbine nach einem der vorstehenden Ansprüche, **dadurch gekennzeichnet, dass** der Durchmesser des profilierten oder abgestuften, kreisförmig umlaufenden Spalts (10) an der Innenseite des Gehäuses (6) größer als an der Außenseite des Gehäuses (6) ist.

## Claims

1. Throughflow turbine (1) having a tangential rotor (3) fitted with blades (2), in front of which there is an overpressure, and the blades (2) of which are each connected or welded at their end faces to a rotor base (4) or to a hub disc and are internally spaced from a shaft (5) extending horizontally through the rotor bases (4), so that the water flowing transversely to the run of the shaft (5) passes through the rotor (3) twice, the rotor (3) being mounted in a housing (6) by means of its shaft (5) and the blades (2) extending horizontally and parallel to the shaft (5) and/or the rotor bases (4) each being arranged in a circular cut-out (8) in the housing walls (9) which is arranged concentrically with respect to the shaft, and being spaced apart by a gap, **characterised in that** the rotor bases (4) or hub discs having a circumference that is profiled or stepped in the axial direction and the cut-outs (8) in the housing walls (9) that accommodate them being profiled or stepped analogously so that the respective gap (10) between the rotor base (4) or hub disc and housing wall (9) is profiled or stepped, the boundary of the profiled or stepped gap (10) is arranged on the housing cut-out (8) on at least one ring (13) which is connected to the housing wall (9) and/or to the rotor base and **in that** the ring or rings (13) that delimit the gap (10) is or are replaceably attached to the housing wall (9).

2. Throughflow turbine according to claim 1, **characterised in that** the gap (10) between the rotor base (4) and housing (8) is stepped at least twice or three times.

3. Throughflow turbine according to claim 1 or 2, **characterised in that** the stepped gap (10) comprises gap portions (10a) arranged parallel or concentrically or at an acute angle to the run of the shaft and gap regions (10b) arranged at right-angles or radially to the shaft (5) which are a continuation of one another, the entry into the gap (10) on the one hand and the exit (10c) therefrom being gap portions that are axial or paraxial or arranged at an acute angle.

4. Throughflow turbine according to one of claims 1 to 3, **characterised in that** the gap portions (10b) arranged radially or obliquely or at right-angles to the shaft (5) have the same or a greater gap width than the gap portions (10a) running parallel or coaxially or at an acute angle to the shaft (5).

5. Throughflow turbine according to one of claims 1 to 4, **characterised in that** the ring (13) that delimits the gap (10) has an axial dimension that roughly corresponds to the thickness of the housing wall (9) or the rotor base (4) or is narrower or wider than the housing wall (9) or the rotor base (4) and **in that** the ring (13) is flush with the inside and/or the outside of the housing wall (9) or of the rotor base.

6. Throughflow turbine according to one of the preceding claims, **characterised in that** the diameter of the profiled or stepped gap (10) extending in a circle is greater on the inside of the housing (6) than on the outside of the housing (6).

## Revendications

1. Turbine à flux traversant (1) avec une roue tangentielle (3) pourvue d'ailettes (2), devant laquelle règne une surpression et dont les ailettes (2) sont reliées ou soudées à chacune de leurs extrémités latérales à un fond de roue (4) ou à un disque de moyeu et présentent une distance intérieure par rapport à un arbre (5) s'étendant horizontalement à travers les fonds de roue (4), de façon que l'eau arrivant transversalement à l'extension de l'arbre (5) traverse deux fois la roue (3), la roue (3) étant montée dans un boîtier (6) au moyen de son arbre (5) et les ailettes (2) s'étendant horizontalement et parallèlement à l'arbre (5) et/ou les fonds de roue (4) étant disposés chaque fois dans une découpe circulaire (8) des parois de boîtier (9) qui est disposée concentriquement à l'arbre (5), et ayant une distance interstitielle, **caractérisée en ce que** les fonds de roue (4) ou disques de moyeu ont une circonférence profilée ou étagée en direction axiale et les découpes (8) des parois de boîtier (9) qui les reçoivent sont profilées ou étagées d'une manière analogue, de sorte que l'interstice respectif (10) entre fond de roue (4) ou disque de moyeu et paroi de boîtier (9) est profilé ou étagé, que la délimitation de l'interstice profilé ou étagé (10) sur la découpe de boîtier (8) est disposée sur au moins une bague (13) qui est reliée à la paroi de boîtier (9) et/ou au fond de roue et que la/les bague(s) (13) qui délimite(nt) l'interstice (10) est/sont fixée(s) de manière remplaçable à la paroi de boîtier (9).

2. Turbine à flux traversant selon la revendication 1, **caractérisée en ce que** l'interstice (10) entre fond de roue (4) et boîtier (8) est étagé au moins deux fois ou trois fois.

3. Turbine à flux traversant selon la revendication 1 ou 2, **caractérisée en ce que** l'interstice (10) étagé présente des sections d'interstice (10a) disposées parallèlement, concentriquement ou à un angle aigu par rapport à l'extension de l'arbre et des zones d'interstice (10b) disposées transversalement ou radialement par rapport à l'arbre (5), qui sont en continuité les unes avec les autres, l'entrée dans l'interstice (10) d'un côté et la sortie (10c) de celui-ci étant chaque fois des sections d'interstice axiales, axialement parallèles ou disposées à angle aigu.

4. Turbine à flux traversant selon une des revendications 1 à 3, **caractérisée en ce que** les zones d'interstice (10b) disposées radialement, obliquement ou transversalement par rapport à l'arbre (5) ont une largeur d'interstice égale ou supérieure à celle des sections d'interstice (10a) s'étendant parallèlement, coaxialement ou à angle aigu par rapport à l'arbre (5).

5. Turbine à flux traversant selon une des revendications 1 à 4, **caractérisée en ce que** la bague (13) qui délimite l'interstice (10) a une dimension axiale qui correspond à peu près à l'épaisseur de la paroi de boîtier (9) ou du fond de roue (4) ou est plus étroite ou plus large que la paroi de boîtier (9) ou le fond de roue (4), et que la bague (13) est en affleurement avec le côté intérieur et/ou le côté extérieur de la paroi de boîtier (9) ou du fond de roue.

6. Turbine à flux traversant selon une des revendications précédentes, **caractérisée en ce que** le diamètre de l'interstice périphérique circulaire profilé ou étagé (10) est plus grand du côté intérieur du boîtier (6) que du côté extérieur du boîtier (6).
